# EUROPEAN PATENT SPECIFICATION

(11) **EP 4 312 412 B1**
(45) Date of publication and mention of the grant of the patent: **14.10.2026**
(21) Application number: 23183787.3
(22) Date of filing: 06.07.2023
(51) Int. Cl.: H04L 41/0823, H04L 12/28, H04L 41/16, H04L 41/5025, H04W 24/02, H04W 16/18, H04L 41/0853, H04L 41/12, H04L 41/5009, H04L 43/08

(54) **SYSTEM AND METHOD FOR MANAGING DEVICES IN COMMUNICATION NETWORK THAT IS IMPLEMENTED AT PREMISES**
SYSTEM UND VERFAHREN ZUR VERWALTUNG VON VORRICHTUNGEN IN EINEM KOMMUNIKATIONSNETZ, DAS AN EINEM GELÄNDE IMPLEMENTIERT IST
SYSTÈME ET PROCÉDÉ DE GESTION DE DISPOSITIFS DANS UN RÉSEAU DE COMMUNICATION QUI EST MIS EN OUVRE DANS DES LOCAUX

(30) Priority: 28.07.2022 FI 20225692
(43) Date of publication of application: 31.01.2024
(73) Proprietor: Elisa Oyj, 00520 Helsinki (FI)
(72) Inventor: Nikitin, Alexander, 00520 Helsinki (FI)
(74) Representative: Moosedog Oy

(56) References cited:
- EP-A1- 3 985 939
- US-A1- 2017 264 501
- US-A1- 2018 317 095
- US-A1- 2021 150 080
- US-A1- 2021 235 293
- US-A1- 2022 167 188

## Description

### TECHNICAL FIELD

The present disclosure relates to systems for managing devices in a communication network that is implemented at a premises. The present disclosure relates to methods for managing devices in a communication network that is implemented at a premises. The present disclosure relates to computer program products for managing devices in a communication network that is implemented at a premises.

### BACKGROUND

Recently, mesh networks are being extensively used to connect devices to each other and to cloud-based services. Mesh networks are becoming increasingly popular to set up a new network that spans more than single router. The mesh networks use mesh devices with wireless processors that contain software, thereby enabling the wireless processors to configure themselves automatically, with negligible or null central coordination. Applications of mesh network may be in, but are not limited to, military organisations, smart cities, industrial automation, emergency services, agriculture, and the like. In a first example, the military organisations may use the mesh network to avoid breakdowns in communication. In a second example, smart cities may use mesh network to monitor traffic flow, sewage treatment, and control street lighting.

Currently, the mesh networks have easy scalability due to the presence of the mesh devices, that act as nodes. Hence, a size of the mesh network can be easily and quickly changed based on the availability and number of the mesh devices in a property (for example, such as a building). However, this increases a workload on each mesh device, as the mesh devices are configured to work like a router, along with sending messages to the other mesh devices. This leads to unwanted complications due to the increase in the workload, thereby leading to a mismanagement of the mesh devices. Beneficially, the mesh network reduces redundancy by configuring a given mesh device to both receive and translate information received from other mesh devices. Hence, even if another mesh device stops working due to an unforeseen circumstance, such as, obstruction by walls or object present within the property, the mesh network will use the given mesh device, to continue functioning in the mesh network. However, the given mesh device may experience latency due to a decrease in a number of mesh devices in the mesh network. Advantageously, the mesh networks can easily increase range by connecting the nodes (i.e., the given mesh device) to gateways, wherein the gateways transfer the messages to the other mesh devices in the mesh network. However, this increases power consumption for each node, as the node is configured to function both as an endpoint a route. Hence, the given mesh device will need to draw more power than required to operate efficiently, which impacts an electricity bill of the property.

A patent document EP 3 985 939 A1 discloses a cloud-based Wi-Fi monitoring framework that aggregates network statistics, applies an ML/AI engine to predict metrics, and issues operator/user recommendations such as moving a node. It neither processes premises floor-plan imagery nor combines a floor-plan representation with live mesh-telemetry via parallel pipelines and a reinforcement-learning loop to select actions.

A patent document US 2018/0317095 A1 concerns about Zigbee network design/monitoring tools that import a building floor plan to visualize device locations and mesh links and to guide placement and site testing. It lacks machine-learning pipelines or reinforcement learning for action selection and does not fuse a floor-plan embedding with network-performance data in parallel.

A patent document US 2017/0264501 A1 describes collecting tests and environmental/sensor data to diagnose home Internet/Wi-Fi issues and to generate automated recommendations using machine-learning. It neither analyzes floor-plan images nor employs a reinforcement-learning control loop based on combined floor-plan and mesh-telemetry representations.

A patent document US 2021/0235293 A1 teaches a network analytics engine that ingests performance data and uses machine learning to recommend, for example, adding or placing an access point. It does not disclose dual parallel pipelines that embed both floor-plan imagery and mesh-network data and then use reinforcement learning to select actions.

A patent document US2022/0167188 A1 proposes deep reinforcement learning for autonomous network management, computing states, transitions and action policies from network metrics. It does not obtain or process premises floor-plan images nor run a floor-plan pipeline in parallel with a mesh-data pipeline to inform the RL policy.

A patent document US 2021/0150080 A1 relates to synthetic data generation and machine-learning methods for recognizing symbols and elements in floor-plan drawings, including workflows for object detection/classification. It is not concerned with managing communication networks and does not integrate floor-plan analysis with network telemetry or reinforcement-learning-based action selection.

Therefore, in light of aforementioned discussion, there exists a need to overcome the aforementioned drawbacks associated with management of mesh devices in a property.

### SUMMARY

The present disclosure seeks to provide a system for managing devices in a communication network that is implemented at a premises. The present disclosure also seeks to provide a method for managing devices in a communication network that is implemented at a premises. The present disclosure also seeks to provide a computer program product for managing devices in a communication network that is implemented at a premises. An aim of the present disclosure is to provide a solution that overcomes at least partially the problems encountered in prior art.

In a first aspect, the present disclosure provides a system for managing devices in a communication network that is implemented at a premises, the system comprising at least one server configured to:
- obtain premises planning data and network data from a service associated with the premises, wherein the premises planning data pertains to at least one floor plan of the premises and the network data pertains to the devices in the communication network and a performance of the communication network, wherein the devices in the communication network are communicably coupled in a mesh network topology;
- process the premises planning data via a first processing pipeline to generate a first output;
- process the network data via a second processing pipeline to generate a second output; and
- process the first output and the second output using a reinforcement learning-based processing loop to determine at least one action that is to be implemented for managing the devices in the communication network,
wherein the first and the second processing pipelines are configured to execute the premises planning data, and the network data in a parallel fashion.

In a second aspect, the present disclosure provides a method for managing devices in a communication network that is implemented at a premises, the method comprising:
- obtaining premises planning data and network data from a service associated with the premises, wherein the premises planning data pertains to at least one floor plan of the premises and the network data pertains to the devices in the communication network and a performance of the communication network, wherein the devices in the communication network are communicably coupled in a mesh network topology;
- processing the premises planning data via a first processing pipeline to generate a first output;
- processing the network data via a second processing pipeline to generate a second output; and
- processing the first output and the second output using reinforcement learning-based processing loop to determine at least one action that is to be implemented for managing the devices in the communication network,
wherein the first and the second processing pipelines are configured to execute the premises planning data, and the network data in a parallel fashion.

In a third aspect, the present disclosure provides a computer-program product for managing devices in a communication network that is implemented at a premises, wherein the computer program product comprises a non-transitory machine-readable data storage medium having stored thereon program instructions that, when accessed by a processing device, cause the processing device to execute steps of a method of the second aspect.

Embodiments of the present disclosure substantially eliminate or at least partially address the aforementioned problems in the prior art, and enable efficient management of devices in the communication network in the premises.

Additional aspects, advantages, features and objects of the present disclosure would be made apparent from the drawings and the detailed description of the illustrative embodiments construed in conjunction with the appended claims that follow.

It will be appreciated that features of the present disclosure are susceptible to being combined in various combinations without departing from the scope of the present disclosure as defined by the appended claims.

### BRIEF DESCRIPTION OF THE DRAWINGS

The summary above, as well as the following detailed description of illustrative embodiments, is better understood when read in conjunction with the appended drawings. For the purpose of illustrating the present disclosure, exemplary constructions of the disclosure are shown in the drawings. However, the present disclosure is not limited to specific methods and instrumentalities disclosed herein. Moreover, those skilled in the art will understand that the drawings are not to scale. Wherever possible, like elements have been indicated by identical numbers.

Embodiments of the present disclosure will now be described, by way of example only, with reference to the following diagrams wherein:
- FIG. 1: is a block diagram of a system for managing devices in a communication network, in accordance with an embodiment of the present disclosure;
- FIG. 2: is an exemplary block diagram for managing devices in a communication network that is implemented at a premises, in accordance with an embodiment of the present disclosure; and
- FIG. 3: is an illustration of a flowchart depicting steps of a method for managing devices in a communication network, in accordance with an embodiment of the present disclosure.

In the accompanying drawings, an underlined number is employed to represent an item over which the underlined number is positioned or an item to which the underlined number is adjacent. A non-underlined number relates to an item identified by a line linking the non-underlined number to the item. When a number is non-underlined and accompanied by an associated arrow, the non-underlined number is used to identify a general item at which the arrow is pointing.

### DETAILED DESCRIPTION OF EMBODIMENTS

The following detailed description illustrates embodiments of the present disclosure and ways in which they can be implemented. Although some modes of carrying out the present disclosure have been disclosed, those skilled in the art would recognize that other embodiments for carrying out or practising the present disclosure are also possible.

In a first aspect, the present disclosure provides a system for managing devices in a communication network that is implemented at a premises, the system comprising at least one server configured to:
- obtain premises planning data and network data from a service associated with the premises, wherein the premises planning data pertains to at least one floor plan of the premises and the network data pertains to the devices in the communication network and a performance of the communication network, wherein the devices in the communication network are communicably coupled in a mesh network topology;
- process the premises planning data via a first processing pipeline to generate a first output;
- process the network data via a second processing pipeline to generate a second output; and
- process the first output and the second output using a reinforcement learning-based processing loop to determine at least one action that is to be implemented for managing the devices in the communication network, wherein the first and the second processing pipelines are configured to execute the premises planning data, and the network data in a parallel fashion.

In a second aspect, the present disclosure provides a method for managing devices in a communication network that is implemented at a premises, the method comprising:
- obtaining premises planning data and network data from a service associated with the premises, wherein the premises planning data pertains to at least one floor plan of the premises and the network data pertains to the devices in the communication network and a performance of the communication network, wherein the devices in the communication network are communicably coupled in a mesh network topology;
- processing the premises planning data via a first processing pipeline to generate a first output;
- processing the network data via a second processing pipeline to generate a second output; and
- processing the first output and the second output using reinforcement learning-based processing loop to determine at least one action that is to be implemented for managing the devices in the communication network, wherein the first and the second processing pipelines are configured to execute the premises planning data, and the network data in a parallel fashion.

In a third aspect, the present disclosure provides a computer-program product for managing devices in a communication network that is implemented at a premises, wherein the computer program product comprises a non-transitory machine-readable data storage medium having stored thereon program instructions that, when accessed by a processing device, cause the processing device to execute steps of a method of the second aspect.

The present disclosure provides the aforementioned system, method and computer program product to manage the devices in the premises. The communication network ensures continuous connectivity of the devices within the premises, by constantly updating itself regarding floorplan of the premises. The system constantly updates itself to optimally tune the devices in a required manner, based on the floor plan of the premises and a quality of signal from different devices connected in the communication network. As a result of which, existing devices in the communication network is adjusted in a better manner to ensure continuous connectivity and an effective coverage area. Furthermore, to maintain the continuous connectivity and an effective coverage area, adding new devices in the communication network in the premises, will not disrupt existing connectivity in the communication network. Additionally, alternatively, the devices may be tuned automatically according to the update to function in a required manner in the premises.

Throughout the present disclosure, the term *"communication network"* refers to an arrangement of interconnected programmable and/or non-programmable components that are configured to facilitate data communication between a plurality of devices of the system. Furthermore, the communication network may include, but is not limited to, one or more peer-to-peer network, a hybrid peer-to-peer network, local area networks (LANs), radio access networks (RANs), metropolitan area networks (MANs), wide area networks (WANs), all or a portion of a public network such as the global computer network known as the Internet, a private network, a cellular network and any other communication system or systems at one or more locations. The devices in the communication network are communicably/operably coupled in a mesh network topology, wherein a given device may be connected directly or indirectly to other devices within the premises. Examples of the devices may include, but are not limited to, routers, switches, modems, bridges. As a first example, there may be three devices A, B, C and D in the communication network that is implemented at the premises. The device A may be directly connected to the device B, but indirectly connected to the device D through the device C. Beneficially, the communication network can create multiple routes of communication for information to travel among the devices. Hence, resilience of the communication network increases in case there is a device or a communication failure, as an alternate route may be available for communication. Continuing with the first example, there may further be a device E in the communication network. The device E may be directly connected to device B, but may also be indirectly connected through the device C to the device D. A communication failure may occur in the in the direct connection between the devices B and E. Consequently, communication between the devices B and E is carried out using an alternate route. Herein, the alternate route is the indirect connection of the devices.

Additionally, the communication network may include wired or wireless communication that can be carried out via any number of known protocols, including, but not limited to, Web Real-Time Communication (WebRTC) protocols, Internet Protocol (IP), Wireless Access Protocol (WAP), Frame Relay, or Asynchronous Transfer Mode (ATM).

Throughout the present disclosure, the term *"premises"* refers to a physical location encompassing a given area. Examples of the premises may include, but are not limited to, a house (for example, such as a bungalow, villa, an apartment, and the like),a housing complex (for example, a multi-storey structure having multiple apartments), a hospital, a commercial establishment (for example, such as a shop, a shopping mall, an office premises, and the like), an educational institution (for example, such as a school, an university), an industrial establishment (for example, such as a factory, a warehouse, and the like).

Throughout the present disclosure, the term *"server"* refers to a structure and/or module that includes programmable and/or non-programmable components configured to store, process and/or share information. Specifically, the at least one server includes any arrangement of physical or virtual computational entities capable of enhancing information to perform various computational tasks. Furthermore, it should be appreciated that the at least one server may be a single hardware server and/or plurality of hardware servers operating in a parallel or distributed architecture. In an example, the at least one server may include components such as memory, at least one processor, a network adapter and the like, to store, process and/or share information with other computing components, such as a user device and/or a user equipment. Optionally, the server is implemented as a computer program that provides various services (such as database service) to other devices, modules or apparatus.

The service associated with the premises acts as a storage of a condition of the communication network and the premises. For example, installation of a new device in the communication network may trigger a change in the service, and a condition of the communication network corresponding to the change is stored in the service. Similarly, a change in positioning of furniture within the premises may trigger a change in the service, and a condition of the premises corresponding to the change is duly stored in the service. The premises planning data and the network data are information provided to the system for processing. The premises planning data comprises information pertaining to the at least one floor plan of the premises. The at least one floor plan is a technical drawing drawn to scale, showing relationships between rooms, spaces, and other physical features of one level of the premises. Examples of the physical features may include, but are not limited to, walls, floors, doors, objects, furniture. It will be appreciated, that the at least one floor plan includes locations of the devices present within the premises (for example, location of a router).

Optionally, the information pertaining to the devices may be indicative of at least one of : manufacturer details of the device, an operation mode of the device, a range of the device, a network technology of the device, a network type of the device, a network protocol of the device, antenna features of the device, physical attributes of the device, security details of the device, physical dimensions of the device, values of at least one parameter associated with the devices, a functionality of the device, a count of a number of devices in the communication network, voltage rating of the device, maximum operating temperature of the device. The at least one parameter associated with the devices may be at least one of: a bandwidth, a transmission rate, a frequency band, a memory space.

Optionally, the performance of the communication network comprises information indicative of at least one of: a throughput, a latency, a backhaul performance, received signal strength indication (RSSI), a roaming time, a coverage area, a scalability, reliability.

The term *"processing pipeline"* refers to a pipeline having a set of interconnected data elements and at least one instruction that are connected in series, which simultaneously process data within the pipeline. It will be appreciated that in processing pipelines, the data elements are executed in a parallel fashion. The processing pipeline may be at least one of: an instruction pipeline, a graphic pipeline, a software pipeline. In the instruction pipeline the at least one instruction may be executed by overlapping phases of the processing pipeline. In the graphic pipeline, a three-dimensional (3D) image is transformed into a two-dimensional (2D) image. Herein, the phases of the processing pipeline are at least one of: fetching, decoding and executing, a given instruction. A technical effect is that the processing pipeline increases throughput of the system. For example, the processing pipeline may fetch a given instruction from a memory while previous instructions are being executed simultaneously. The processing pipeline may be divided into segments of a certain duration. The duration may be equal or unequal. In an instance, the processing pipeline is divided into the first processing pipeline and the second processing pipeline.

Optionally, the first processing pipeline processes the premises planning data. The premises planning data is received as input to the first processing pipeline. The first processing pipeline is divided into stages that are responsible for processing information from the at least one floor plan to generate the first output. The first output is a vector representation of the premises planning data. The vector representation of the premises planning data comprises points, lines, and curves that are based on mathematical formulae. Examples of common file format for vector representation may include, but are not limited to, Adobe Illustrator (.ai), Encapsulated PostScript (.eps), Portable Document Format (.pdf), Scalable Vector Graphics (.svg). Moreover, the vector representation is easily understood by the reinforcement learning-based, which assists in accurate results.

Optionally, the premises planning data is in form of at least one image of the at least one floor plan of the premises, wherein when processing the premises planning data via the first processing pipeline, the at least one server is configured to:
- extract, from the at least one image, metadata pertaining to the premises;
- split the at least one image, using a premises plan splitter, into a plurality of images representing floor plans of a plurality of units of interest in the premises;
- convert the plurality of images, using a premises plan converter, into an internal representation of the premises, wherein a format of the internal representation is different from an image file format of the plurality of images; and
- transform the internal representation of the premises, using a premises plan embedder, into a first vector representation, wherein the first vector representation and the metadata pertaining to the premises collectively constitute the first output of the first processing pipeline.

In this regard, the metadata comprises at least one of: a year of a building in the premises, a number of floors of the building, a total area of the building, a total area of the premises. Such metadata may be represented as at least one: a textual representation, a graphical representation, a tabular representation. The premises plan splitter splits the at least one image into the plurality of images representing floor plans of the plurality of units of interest in the premises. Optionally, the units of interest comprise at least one of: rooms, floors, position of floors, in the building. For example, the premises planning data may be an image representing a floor plan of a building in the premises. The premises plan splitter may split the at least one image into a plurality of images, wherein each image may represent a room of the floor. A technical advantage of using the premises plan splitter is that splitting the plurality of images into the plurality of units of interest makes it easier for the at least one server to decipher information accurately.

Optionally, the term *"premises plan converter"* refers to a digital converter that receives the plurality of images from the premises plan splitter and converts the plurality of images into an internal representation, such that a format of the internal representation is a computer-understandable format. Optionally, the format of the internal representation is a JavaScript Object Notation (JSON) format.

The term *"premises plan embedder"* refers to an embedder that digitally embeds the internal representation of the premises as vectors into the first vector representation. Optionally, the premises plan embedder is implemented using at least one of: an autoencoder architecture, a self-supervised learning architecture. For example, some elements in the internal representation may be masked, and the premises plan embedder may be trained to predict the masked internal representation, and such predicted masked internal representation is thereon sent to the reinforcement learning-based processing loop. Optionally, the premises plan embedder is a floor plan embedder. A technical advantage of processing the premises planning data via the first processing pipeline in the above-mentioned manner is that the first output obtained in this manner is easily understood by the reinforcement learning-based processing loop to determine the at least one action.

Optionally,
- the premises plan splitter is implemented using a first algorithm, the first algorithm being at least one of: a deep neural network algorithm, a computer vision algorithm;
- the premises plan converter is implemented using a plurality of second algorithms, the plurality of second algorithms being implemented as a semantic segmentation algorithm and a classification algorithm; and
- the premises plan embedder is implemented using a third algorithm, the third algorithm being at least one of: convolutional neural network algorithm, self-supervised learning algorithm.

In this regard, the at least one server employs the first algorithm, the plurality of second algorithms and the third algorithm to collectively determine the first output. Additionally, the at least one server employs a given algorithm to compute the first processing pipeline. The given algorithms enable the at least one server to become more accurate in predicting outcomes and/or performing tasks, without being explicitly programmed. Specifically, the given algorithms are employed to artificially train the at least one server so as to enable them to automatically learn and improving performance from experience, without being explicitly programmed.

Optionally, the first algorithm is a deep neural network algorithm, wherein the deep neural network algorithm is used for end-to-end (E2E) learning. The E2E learning refers to training a complex learning system (i.e., the premises plan splitter) represented by a deep neural network model that represents a target system, bypassing intermediate layers usually present in a given processing pipeline. The deep neural network algorithm may be used when a given floor plan of the premises represented in the at least one image is simple. Examples of the deep neural network algorithm may include, but is not limited to, U-Net algorithm, SegFormer^{®} algorithm. The first algorithm can be a computer vision algorithm, wherein the computer vision algorithm mimics working of a human brain. The computer vision algorithm can be used for at least one of: classification, identification, tracking, of the plurality of units of interest in the premises. The computer vision algorithm may be used instead of the deep neural network algorithm when a given floor plan of the premises represented in the at least one image is simple. Examples of the computer vision algorithm may include, but are not limited to, Line segment detector, Ramer-Douglas-Peucker algorithm.

Optionally, the plurality of second algorithms is a semantic segmentation algorithm. The semantic segmentation algorithm assigns a label to every pixel in the plurality of images. It will be appreciated that each pixel represents a given unit of interest that can be classified into a class and the given unit of interest is identifiable unambiguously. Suitably, the semantic segmentation algorithm treats multiple units of interest of the same class as a single entity. For example, a given image may represent a floor plan of room A, room B, floor 1 and floor 2. The given image may be composed of 1000 pixels. Subsequently, upon implementing the semantic segmentation algorithm, 200 pixels of the given image may be attributed to room A, 200 pixels may be attributed to room B, 300 pixels may be attributed to floor 1, and 300 pixels may be attributed to floor 2, thereby labelling the plurality of units of interest in the given image.

Optionally, the plurality of second algorithms is the classification algorithm. Herein, the plurality of images is sent to the classification algorithm, wherein the classification algorithm predicts a class or a category of the plurality of units of interest represented in the plurality of images. The class of the plurality of units of interest refers to a category of a given unit of interest sharing similar characteristics. The class may be pre-known or may be defined by the classification algorithm.

Optionally, the third algorithm is the convolutional neural network algorithm. The convolutional neural network algorithm is a type of artificial neural network used in image recognition. The convolutional neural network algorithm comprises at least one convolutional layer. The convolutional neural network algorithm is used for at least one of: processing, classifying, segmenting of the internal representation of the premises. The third algorithm can be the self-supervised learning algorithm. The self-supervised learning algorithm is a machine learning algorithm, wherein the premises plan embedder trains itself to learn part of an input (i.e., the internal representation) is programmed to refine its own performance. A technical advantage of using the given algorithm is that it makes the system agile and robust.

The second processing pipeline processes the network data. The network data is received as input to the second processing pipeline. The second processing pipeline is divided into stages that are responsible for processing information pertaining to the devices in the communication network and the performance of the communication network to generate the second output. The network sub-pipeline is a segmented portion of a network pipeline, which allows the network data to travel a shorter distance to achieve the second output. It will be appreciated that the network sub-pipeline makes the network more efficient and the system agile. Similar to the first output, the second output is a vector representation of the network data. The vector representation of the network data comprises individual points that may be stored as coordinate pairs to indicate a physical location of the devices in the premises. Examples of common file format for vector representation of the second output is similar to the examples of the common file format for vector representation of the first output.

Optionally, when processing the network data via the second processing pipeline, the at least one server is configured to:
- extract, from the network data, metadata pertaining to the devices in the communication network and the performance of the communication network;
- convert the network data, using a mesh converter into an internal representation of the devices in the communication network and the performance of the communication network, wherein a format of the internal representation is different from at least one format of the network data; and
- transform the internal representation of the devices in the communication network and the performance of the communication network, using a mesh embedder, into a second vector representation, wherein the second vector representation and the metadata pertaining to the devices in the communication network collectively constitute the second output of the second processing pipeline.

Optionally, the metadata comprises at least one of: a signal strength, the physical location, network quality, Internet Protocol (IP) address, Media Access Control (MAC) address, Universal Unique Identifier (UUID), of the device. The mesh converter converts the network data into the internal representation of the devices using a simple data processing pipeline (i.e., the second processing pipeline). The mesh converter changes the format of the internal representation into a format understandable by the mesh embedder. Optionally, the format of the internal representation is a JSON format. The mesh embedder transforms the internal representation into the second vector representation The second vector representation is a high-dimensional embedding from the internal representation of the devices in the communication network and the performance of the communication network. Herein, the high-dimensional embedding is a high-dimensional translation of a high-dimensional vector representation of the internal representation. A technical advantage of processing the network data via the second processing pipeline in the above-mentioned manner is that the second output obtained in this manner is easily understood by the reinforcement learning-based processing loop to determine the at least one action.

Optionally, the mesh embedder is implemented using at least one of: a transformer model, an autoencoder model. The transformer model is a neural network model that learns context (and thereby, meaning) by tracking relationships between the devices in the network data. The autoencoder model is a neural network model that seeks to learn a compressed representation of the internal representation. A technical advantage of using such algorithms for the mesh embedder is that it makes the system agile and robust. Indeed a technical advance is that presented methods can produce embeddings and allow scaling along with a growth in the collected data.

Optionally, the at least one server is further configured to train a given model using an optimization algorithm, the optimization algorithm being at least one of: a gradient descent optimization algorithm, an Adam optimization algorithm, a stochastic gradient descent algorithm. The given model is selected from the transformer model and/or the autoencoder model. The term *"optimisation algorithm"* refers to a training algorithm which trains the given model to optimise its results. The gradient descent algorithm is an algorithm for training the given model by minimizing errors between an actual result and an expected result. The Adam optimization algorithm is a replacement optimization algorithm for stochastic gradient descent which can handle sparse gradients on noisy problems. The stochastic gradient descent algorithm is an optimization algorithm used to train the given model to find the parameters that correspond to a best fit between a predicted output and an actual output. A technical advantage of using the above-mentioned algorithms for training the given model is that these algorithms are computationally fast and require less memory space, hence keeping the system agile. Another technical benefit of training the given model using such algorithms is that they train the given model to optimise its results, making them more accurate. Optionally, the given model is trained optimization algorithms, known in the art.

Optionally, the at least one server is further configured to train the premises plan splitter, the premises plan converter, the premises plan embedder, the mesh converter, and the mesh embedder with linear warmup and cosine annealing. Herein, linear warmup is a learning rate schedule comprising a learning rate of the given model. The learning rate is increased linearly from a low rate to a constant rate, so as to reduce volatility in early stages of training the given model. Moreover, cosine annealing is an aggressive learning rate schedule. Herein, the learning rate of the given model starts high, and drops relatively rapidly to a minimum value near zero before being rapidly increased again to a maximum. Optionally, the at least one server is further configured to train the given model using a backpropagation algorithm. Herein, the given model back-propagates errors from output of the premises plan embedder and the mesh embedder to input of the premises plan splitter and the mesh converter, respectively. Optionally, the given model may be trained on another server, and thereafter be transferred to the server for inference.

The term *"reinforcement learning-based processing loop"* refers to an infinite loop which recommends actions based on a given situation. The reinforcement learning-based processing loop may either recommend such actions on a request, or periodically. Notably, the reinforcement learning-based processing loop evaluates a quality of an ongoing situation, chooses an action from learned state-transition dynamics and thereafter recommends an action to an entity. Herein, the entity may be a human or a robot. Moreover, the entity thereon performs the action, triggering a change in the communication network at the premises, which thereafter triggers a further iteration. Beneficially, such performing of the action by the entity assist in managing the devices in the communication network. It will be appreciated that the first output and the second output are processed analogously.

Optionally, the at least one server is further configured to:
- obtain at least one other data from at least one other data source;
- process the at least one other data is via at least one other processing pipeline to generate at least one other output; and
- process the at least one other output using reinforcement learning based processing loop to determine the at least one action.

Optionally, the reinforcement learning-based processing loop is implemented using a reinforcement learning algorithm, the reinforcement learning algorithm being one of: a Q-learning algorithm, a Deep Q-learning algorithm, a Deep Deterministic Policy Gradient algorithm, a Q-learning algorithm with Normalized Advantage Functions. The term *"reinforcement learning algorithm"* refers to a machine learning-based training algorithm which supervises the training by rewarding desired results and/or punishing undesirable results. The Q-learning algorithm is a reinforcement learning algorithm which assists the given model to learn a value of an action in a given state. The Deep Q-learning algorithm is a deep-learning based reinforcement learning algorithm which assists the given model to map given input states into pairs. The Deep Deterministic Policy Gradient (DDPG) algorithm is a model-free off-policy reinforcement learning algorithm which assists the given model to learn continuous actions. A technical benefit of using the reinforcement learning algorithms as mentioned above is that such reinforcement learning algorithms maximize performance of the system.

Optionally, the at least one action comprises at least one of: tune a given device using a given setting, re-position a given device, add a given device, remove a given device. Herein, tuning the given device using the given setting refers to adjusting a frequency of the given device. A technical advantage of the at least one action comprising the above-mentioned is that accurate identification of issues and performing of such action allows the device to function appropriately, such that the communication network exhibits superior performance.

Optionally, when processing the first output and the second output using the reinforcement learning-based processing loop, the at least one server is configured to:
- evaluate a current quality of the communication network, based on the premises planning data and the network data;
- determine whether the current quality of the communication network is less than a predefined quality; and
- when the current quality of the communication network is less than the predefined quality, use a function which maps a set of actions that are feasible corresponding to a current state of the communication network with an expected quality of the communication network which would be achieved upon implementation of the set of actions, wherein the actions in the set are identified as the at least one action when the expected quality of the communication network is equal to or greater than the predefined quality.

In this regard, the at least one action is recommended accurately by the reinforcement learning-based processing loop. Optionally, the machine learning algorithm is chosen based on the quality of the communication network. The current quality refers to a quality of the communication network, in real time. Optionally, a quality of the communication network is measured as at least one of: a connection speed, an upload speed, a download speed, a network latency. The predefined quality refers to a quality of the communication network that is required for a required performance of the devices in the premises. As a first example, if the quality is measured as a network latency, the current quality may be 150 milliseconds, and the predefined quality may be 100 milliseconds. Herein, the current quality of the communication network is less than the predefined quality, since network latency is a negative value. Herein, negative value of the network latency means a reduction in response time in prediction of the at least one action by the reinforcement learning-based processing loop. The function estimates the quality of the communication network, by mapping the current quality with the predefined quality. For example, a function may be "Q= S*A*R, wherein S is a set of states having positions of the devices and a structure of the premises, A is a set of actions, and R is a measurement of the quality of the communication network. The quality of the communication network may be expressed in terms of a corresponding action. In an instance, the measurement of the quality of the communication network may be speed of the communication network. A corresponding set of actions may comprise at least one of: change a position of the device, add a new device, adjust frequency of the device. The expected quality refers to a quality of the communication network that is required for the required performance. Optionally, the expected quality is calculated using at least one of: a Bellman equation, a deep Q-learning approach. In furtherance to the first example, the expected quality may be 30 milliseconds. A technical advantage of processing the first output and the second output in this manner is that it maximises performance of the communication network (and the devices therein), since the set of actions result in an improved quality of the communication network. Optionally, a machine learning algorithm is chosen based on the quality of the communication network.

Optionally, the at least one server is further configured to provide a communication indicating the at least one action to be implemented in a form of at least one: a notification, a web interface, a speech interface, to a user device communicably coupled to the at least one server. The term *"user device"* refers to a communication device which is accessible by a user. Optionally, the user is the entity who performs the action for managing devices in the communication network. Examples of the user device include, but are not limited to, a laptop, a computer, a tablet, a phablet, a pager, a smartphone, a smartwatch, a smart device. For example, the communication may be an email notification or an alert by a virtual assistant. A technical advantage of providing the communication is that it allows an entity to perform the at least one action, resulting in accurate and useful performance of the devices. The communication may be provided to the user device in real time. The communication may include at least one of: location, network quality, requirement of the device, in the premises. Upon receiving such communication, the at least one action may be initiated.

Optionally, the at least one server is further configured to:
- perform a simulation and/or A/B testing of the communication network to obtain a reference output; and
- select the reinforcement learning algorithm based on the reference output.

As an example, A/B testing can be used as one selection criteria to find best/suitable approach. For example, autoencoders or transformers for making the embeddings can be used. All the users can be split into two sets; for the first set of users, autoencoders could be used, and for the second set of users- transformers could be used. Then, metrics over these sets can be calculated (e.g., number of complaints, quality of service, etc.) and then statistically compare which one is better. A/B testing in this example would help to evaluate all the components of the system. Results of the A/B system can be used when selecting which reinforcement learning algorithm is selected.

In this regard, a technical advantage of performing such a simulation is testing the communication network, for selecting an appropriate reinforcement learning algorithm. Herein, the simulation test is used to predict performance of the communication network, and to generate the reference output. Similarly, the A/B testing is a method of comparing two versions of the communication network against each other to determine a version out of the two versions that performs better with respect to the other version, thereby generating the reference output. Beneficially, the simulation and/or the A/B testing are used to perform evaluation of the communication network. Alternatively, optionally, the at least one server selects the reinforcement learning algorithm based on a survey.

Optionally, the at least one server is further configured to detect at least one of: a change in the premises, a change in the at least one floor plan of the premises, a change in the devices in the communication network, a change in performance of the devices in the communication network, wherein the premises planning data and the network data are obtained upon such detection. When at least one of such occurrences is detected, there occurs a change in the service associated with the premises either automatically or manually. The premises planning data and the network data are updated accordingly. In such case, such updated premises planning data and network data are processed again to identify the at least one action to be performed. Subsequently, updating the premises planning data and the network data is repeated over time to ensure accurate performance of the devices when the at least one action is performed. In this manner, the communication network is tuned such that each device performs accurately. A technical advantage of such detection is that it allows errors to be identified timely, such that the communication network is tuned accurately. Moreover, an architecture is chosen using cross-validation or assessing performance of the at least one action.

Optionally, the at least one server comprises at least one graphical processing unit (GPU), wherein the at least one GPU is configured to implement at least one processing task. The term *"graphical processing unit"* refers to a processing unit which assists in creating and rendering computer graphics. Herein, the at least one GPU is configured to implement at least one of: processing the premises planning data, processing the network data, processing the output data. A technical advantage of utilizing the at least one GPU is that it allows for faster processing, improving performance of the system. Alternatively, optionally, the at least one server does not comprise at least one graphical processing unit (GPU). Herein, the at least one processing task is implemented by at least one central processing unit (CPU). Optionally, the at least one server comprises a tensor processing unit (TPU), wherein modelling processing is implemented on the TPU.

Optionally, the at least one server comprises a plurality of servers communicably coupled to each other, the plurality of servers being located in a same geographical region and/or in proximal geographical regions. It will be appreciated that the given model requires the at least one GPU for quick processing, so the plurality of servers are implemented, wherein each server comprises the at least one GPU. A technical advantage of having the plurality of servers is robustness of the system along with quick processing, such that none or a negligible latency is observed. It will be appreciated that it makes the system agile. Moreover, communication between the plurality of servers is resource-intensive and therefore requiring the plurality of servers to be located in proximity.

Optionally, the system further comprises at least one balancer communicably coupled to the plurality of servers to enable load balancing across the plurality of servers. The term *"balancer"* refers to a device that distributes processing traffic across a number of servers. Examples of the balancer include, but are not limited to, an Application Load Balancer, a Network Load Balancer, a Classic Load Balancer, a Gateway Load Balancer. A technical advantage of using the at least one balancer is that it distributes the traffic equally amongst the plurality of servers; and prevents any single server from getting overloaded and possibly breaking down.

Optionally, the system further comprises a data repository communicably coupled to the at least one server, wherein the at least one server is configured to store, at the data repository, at least one of: the premises planning data, the network data, the first output, the second output, the reference output, information pertaining to the at least one action. A technical advantage of the data repository is that it allows the at least one server to store lesser data, making it lighter and thereby facilitating faster processing of the at least one server.

The present disclosure also relates to the method as described above. Various embodiments and variants disclosed above, with respect to the aforementioned method, apply *mutatis mutandis* to the method.

The present disclosure also relates to the computer program product as described above. Various embodiments and variants disclosed above, with respect to the aforementioned method, apply *mutatis mutandis* to the computer program product.

The computer program product for managing devices in a communication network that is implemented at a premises, the computer program product comprising a non-transitory machine-readable data storage medium having stored thereon program instructions that, when accessed by a processing device, cause the processing device to execute steps of the aforementioned method. The term *"computer program product"* refers to a software product comprising program instructions that are recorded on the non-transitory machine-readable data storage medium, wherein the software product is executable upon a computing hardware for implementing the aforementioned steps of the method for managing devices in a communication network that is implemented at a premises.

In an embodiment, the non-transitory machine-readable date storage medium can direct a machine (such as computer, other programmable data processing apparatus, or other devices) to function in a particular manner, such that the program instructions stored in the non-transitory machine-readable data storage medium case a series of steps to implement the function specified in a flowchart corresponding to the instructions. Examples of the non-transitory machine-readable data storage medium includes, but is not limited to, an electronic storage device, a magnetic storage device, an optical storage device, an electromagnetic storage device, a semiconductor storage device, a portable computer diskette, a hard disk, a random access memory (RAM), a read-only memory (ROM), an erasable programmable read-only memory (EPROM or Flash memory), a static random access memory (SRAM), a portable compact disc read-only memory (CD-ROM), a digital versatile disk (DVD), a memory stick, a floppy disk, a mechanically encoded device such as punch-cards or raised structures in a groove having instructions recorded thereon, or any suitable combination thereof.

### EXPERIMENTAL PART

As mentioned above, the format of the internal representation is a JSON format. Exemplary embodiments of the JSON format are as follows:

### Example 1:

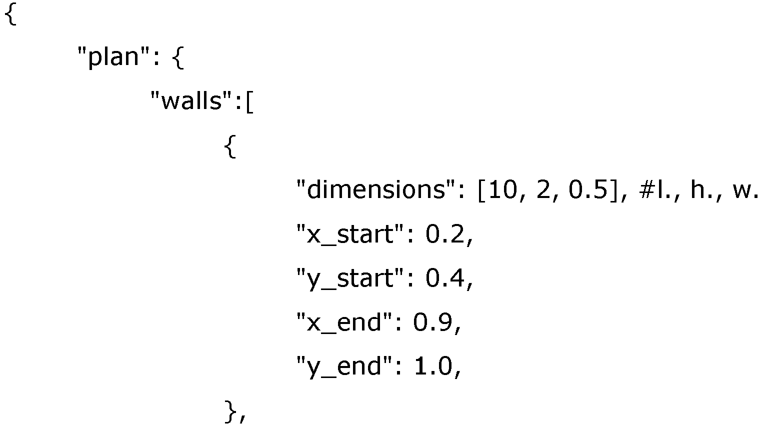

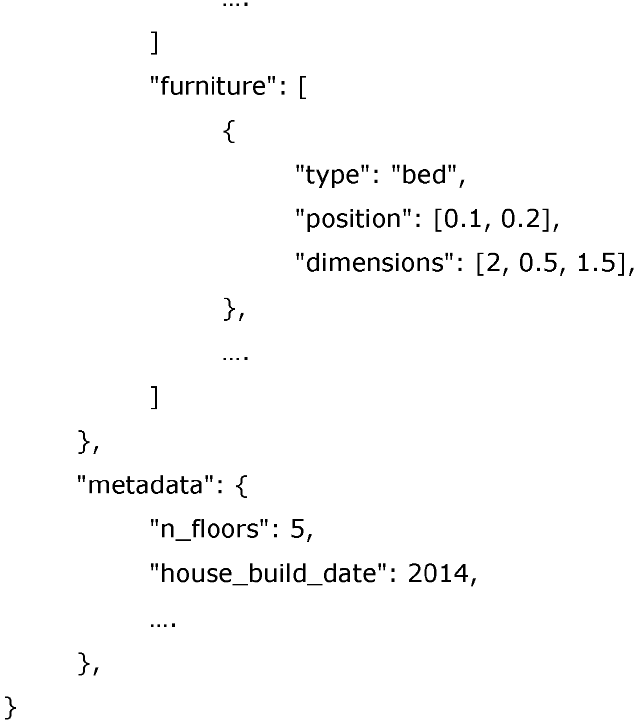

### Example 2:

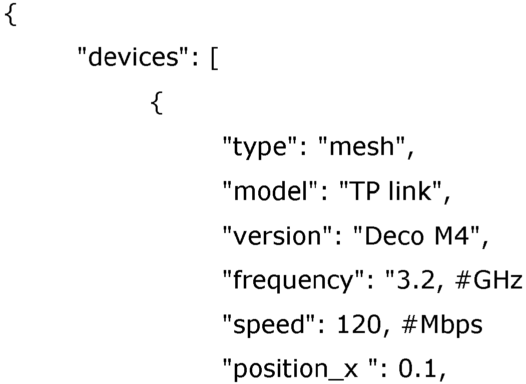

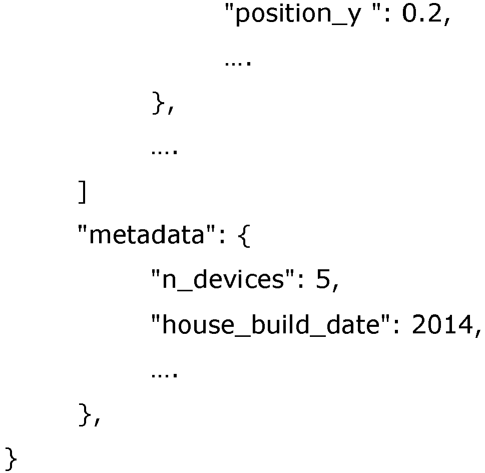

### DETAILED DESCRIPTION OF THE DRAWINGS

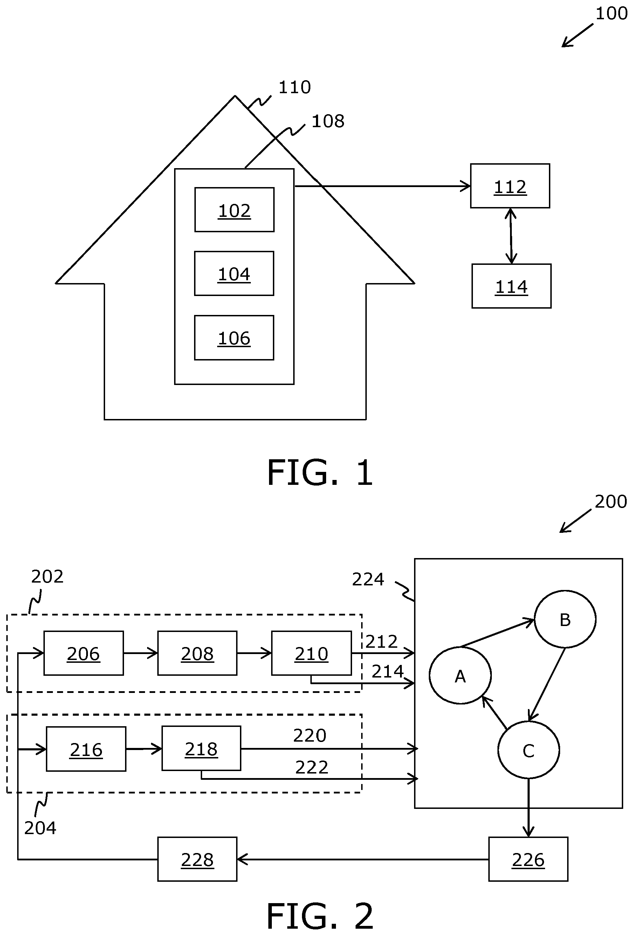

Referring to FIG. 1, there is shown a block diagram of a system **100** for managing devices (depicted as devices **102, 104, 106)** in a communication network **108,** in accordance with an embodiment of the present disclosure. The system **100** is implemented at a premises **110.** The system **100** comprises at least one server (depicted as a server **112).** The system **100** further comprises a data repository **114** communicably coupled to the at least one server **112.**

Referring to FIG. 2, there is shown an exemplary block diagram **200** for managing devices in a communication network that is implemented at a premises, in accordance with an embodiment of the present disclosure. The exemplary block diagram **200** may provide premises planning data and network data for processing to a first processing pipeline **202** and a second processing pipeline **204.** In the first processing pipeline **202,** firstly, a premises plan splitter **206** may be used to split at least one image into a plurality of images. Secondly, a premises plan converter **208** may be used to convert the plurality of images into an internal representation of the premises. Thirdly, a premises plan embedder **210** may be used to transform the internal representation of the premises into a first vector representation (as shown by an arrow **212).** Finally, metadata is extracted (as shown by an arrow **214)** from the at least one image. The first vector representation (as shown by the arrow **212)** and the metadata constitute a first output of the first processing pipeline **202.**

In the second processing pipeline **204,** a mesh converter **216** may be used to convert the network data into an internal representation of the devices in the communication network and the performance of the communication network. Subsequently, a mesh embedder **218** may be used to transform the internal representation of the devices in the communication network and the performance of the communication network into a second vector representation (as shown by an arrow **220).** Finally, metadata pertaining to the devices in the communication network and the performance of the communication network is extracted (as shown by an arrow **222).** The second vector representation (as shown by the arrow **220)** and the metadata constitute a second output of the second processing pipeline **204.** The first output and the second output are processed by a reinforcement learning-based processing loop **224.** The reinforcement learning-based processing loop **224** may be an exemplary cyclic process flow. At step **A,** a current quality of the communication network may be evaluated, based on a given input. At step **B,** an action is chosen based on the current quality of the communication network. At step **C,** the action is recommended to a user device **226.** Simultaneously, output of step **C** may further be an input to step **A.** The user device **226** performs the action as a service **228** associated with the premises.

FIG. 2 is merely an example, which should not unduly limit the scope of the claims herein. A person skilled in the art will recognize many variations, alternatives, and modifications of embodiments of the present disclosure.

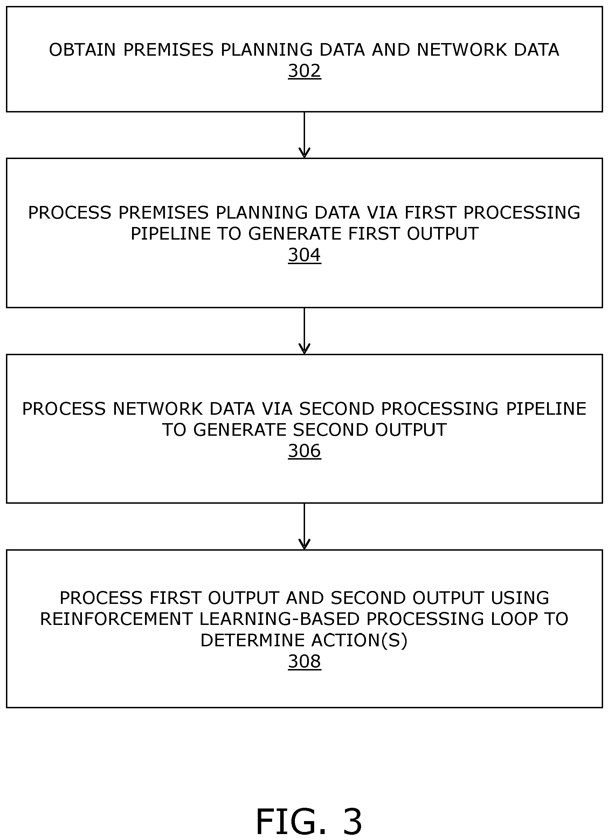

Referring to FIG. 3, there is shown an illustration of a flowchart depicting steps of a method for managing devices in a communication network, in accordance with an embodiment of the present disclosure. At step **302,** premises planning data and network data are obtained from a service associated with the premises. The premises planning data pertains to at least one floor plan of the premises and the network data pertains to the devices in the communication network and a performance of the communication network. At step **304,** the premises planning data is processed via a first processing pipeline to generate a first output. At step **306,** the network data is processed via a second processing pipeline to generate a second output. At step **308,** the first output and the second output are processed using reinforcement learning-based processing loop to determine at least one action that is to be implemented for managing the devices in the communication network.

Expressions such as "including", "comprising", "incorporating", "have", "is" used to describe and claim the present disclosure are intended to be construed in a non-exclusive manner, namely allowing for items, components or elements not explicitly described also to be present. Reference to the singular is also to be construed to relate to the plural.

## Claims

1. A system (100) for managing devices (102, 104, 106) in a communication network (108) that is implemented at a premises (110), the system comprising at least one server (112) configured to:
- obtain premises planning data and network data from a service (228) associated with the premises, wherein the premises planning data pertains to at least one floor plan of the premises and the network data pertains to the devices in the communication network and a performance of the communication network, wherein the devices in the communication network are communicably/operably coupled in a mesh network topology;
- process the premises planning data via a first processing pipeline (202) to generate a first output;
- process the network data via a second processing pipeline (204) to generate a second output; and
- process the first output and the second output using a reinforcement learning-based processing loop (224) to determine at least one action that is to be implemented for managing the devices in the communication network,
wherein the first and the second processing pipelines (202, 204) are configured to execute the premises planning data, and the network data in a parallel fashion.

2. The system (100) according to claim 1, wherein the at least one server (112) is further configured to provide a communication indicating the at least one action to be implemented in a form of at least one: a notification, a web interface, a speech interface, to a user device (226) communicably coupled to the at least one server.

3. The system (100) according to claim 1 or 2, wherein the at least one action comprises at least one of: tune a given device using a given setting, re-position a given device, add a given device, remove a given device.

4. The system (100) according to any of the preceding claims, wherein the premises planning data is in form of at least one image of the at least one floor plan of the premises (110), wherein when processing the premises planning data via the first processing pipeline (202), the at least one server (112) is configured to:
- extract, from the at least one image, metadata pertaining to the premises;
- split the at least one image, using a premises plan splitter (206), into a plurality of images representing floor plans of a plurality of units of interest in the premises;
- convert the plurality of images, using a premises plan converter (208), into an internal representation of the premises, wherein a format of the internal representation is different from an image file format of the plurality of images; and
- transform the internal representation of the premises, using premises plan embedder (210), into a first vector representation, wherein the first vector representation and the metadata pertaining to the premises collectively constitute the first output of the first processing pipeline (202).

5. The system (100) according to any of the preceding claims, wherein:
- the premises plan splitter (206) is implemented using a first algorithm, the first algorithm being at least one of: a deep neural network algorithm, a computer vision algorithm;
- the premises plan converter (208) is implemented using a plurality of second algorithms, the plurality of second algorithms being implemented as a semantic segmentation algorithm and a classification algorithm; and
- the premises plan embedder (210) is implemented using a third algorithm, the third algorithm being at least one of: convolutional neural network algorithm, self-supervised learning algorithm.

6. The system (100) according to any of the preceding claims, wherein when processing the network data via the second processing pipeline (204), the at least one server (112) is configured to:
- extract, from the network data, metadata pertaining to the devices (102, 104, 106) in the communication network (108) and the performance of the communication network;
- convert the network data, using a mesh converter (216) into an internal representation of the devices (102, 104, 106) in the communication network (108) and the performance of the communication network, wherein a format of the internal representation is different from at least one format of the network data; and
- transform the internal representation of the devices (102, 104, 106) in the communication network (108) and the performance of the communication network, using a mesh embedder (218), into a second vector representation, wherein the second vector representation and the metadata pertaining to the devices in the communication network collectively constitute the second output of the second processing pipeline (204).

7. The system (100) according to claim 6, wherein the mesh embedder (218) is implemented using at least one of: a transformer model, an autoencoder model.

8. The system (100) according to claim 7, wherein the at least one server (112) is further configured to train the transformer model and/or the autoencoder model using an optimization algorithm, the optimization algorithm being at least one of: a gradient descent optimization algorithm, an Adam optimization algorithm, a stochastic gradient descent algorithm.

9. The system (100) according to any of the preceding claims, wherein when processing the first output and the second output using the reinforcement learning-based processing loop (224), the at least one server (112) is configured to:
- evaluate a current quality of the communication network (108), based on the premises planning data and the network data;
- determine whether the current quality of the communication network (108) is less than a predefined quality; and
- when the current quality of the communication network (108) is less than the predefined quality, use a function which maps a set of actions that are feasible corresponding to a current state of the communication network with an expected quality of the communication network which would be achieved upon implementation of the set of actions, wherein the actions in the set are identified as the at least one action when the expected quality of the communication network is equal to or greater than the predefined quality.

10. The system (100) according to any of the preceding claims, wherein the reinforcement learning-based processing loop (224) is implemented using a reinforcement learning algorithm, the reinforcement learning algorithm being one of: a Q-learning algorithm, a Deep Q-learning algorithm, a Deep Deterministic Policy Gradient algorithm, a Q-learning algorithm with Normalized Advantage Functions.

11. The system (100) according to claim 10, wherein the at least one server (112) is further configured to:
- perform a simulation and/or A/B testing of the communication network (108) to obtain a reference output; and
- select the reinforcement learning algorithm based on the reference output.

12. The system (100) according to any of the preceding claims, wherein the at least one server (112) is further configured to detect at least one of: a change in the premises (110), a change in the at least one floor plan of the premises, a change in the devices (102, 104, 106) in the communication network (108), a change in performance of the devices in the communication network, wherein the premises planning data and the network data are obtained upon such detection.

13. The system (100) according to any of the preceding claims, further comprising a data repository communicably coupled to the at least one server (112), wherein the at least one server is configured to store, at the data repository, at least one of: the premises planning data, the network data, the first output, the second output, information pertaining to the at least one action.

14. A method for managing devices (102, 104, 106) in a communication network (108) that is implemented at a premises (110), the method comprising:
- obtaining premises planning data and network data from a service (228) associated with the premises, wherein the premises planning data pertains to at least one floor plan of the premises and the network data pertains to the devices in the communication network and a performance of the communication network, wherein the devices in the communication network are communicably/operably coupled in a mesh network topology;
- processing the premises planning data via a first processing pipeline (202) to generate a first output;
- processing the network data via a second processing pipeline (204) to generate a second output; and
- processing the first output and the second output using reinforcement learning-based processing loop (224) to determine at least one action that is to be implemented for managing the devices in the communication network,
wherein the first and the second processing pipelines (202, 204) are configured to execute the premises planning data, and the network data in a parallel fashion.

15. A computer-program product for managing devices (102, 104, 106) in a communication network (108) that is implemented at a premises (110), wherein the computer program product comprises a non-transitory machine-readable data storage medium having stored thereon program instructions that, when accessed by a processing device, cause the processing device to execute steps of a method of claim 14.

## Patentansprüche

1. System (100) zum Verwalten von Vorrichtungen (102, 104, 106) in einem Kommunikationsnetzwerk (108), das in einer Räumlichkeit (110) implementiert ist, wobei das System mindestens einen Server (112) umfasst, der konfiguriert zum:
- Erhalten von Räumlichkeitsplanungsdaten und Netzwerkdaten von einem Dienst (228), der mit der Räumlichkeit assoziiert ist, wobei die Räumlichkeitsplanungsdaten sich auf mindestens einen Bodenplan der Räumlichkeiten beziehen und die Netzwerkdaten sich auf die Vorrichtungen in dem Kommunikationsnetzwerk und eine Leistung des Kommunikationsnetzwerks beziehen, wobei die Vorrichtungen in dem Kommunikationsnetzwerk in einer Mesh-Netzwerktopologie kommunikativ/betriebsfähig gekoppelt sind;
- Verarbeiten der Räumlichkeitsplanungsdaten über eine erste Verarbeitungspipeline (202), um eine erste Ausgabe zu erzeugen;
- Verarbeiten der Netzwerkdaten über eine zweite Verarbeitungspipeline (204), um eine zweite Ausgabe zu erzeugen; und
- Verarbeiten der ersten Ausgabe und der zweiten Ausgabe unter Verwendung einer auf Verstärkungslernen basierenden Verarbeitungsschleife (224), um mindestens eine Aktion zu bestimmen, die zur Verwaltung der Vorrichtungen in dem Kommunikationsnetzwerk implementiert werden soll,
wobei die erste und die zweite Verarbeitungspipeline (202, 204) konfiguriert sind, um die Räumlichkeitsplanungsdaten und die Netzwerkdaten auf parallele Weise auszuführen.

2. System (100) nach Anspruch 1, wobei der mindestens eine Server (112) ferner konfiguriert ist, um eine Kommunikation, die die mindestens eine zu implementierende Aktion angibt, in Form von mindestens einem von: einer Benachrichtigung, einer Webschnittstelle, einer Sprachschnittstelle, an eine Benutzervorrichtung (226), die kommunikativ an den mindestens einen Server gekoppelt ist, bereitzustellen.

3. System (100) nach Anspruch 1 oder 2, wobei die mindestens eine Aktion mindestens eines umfasst von: Abstimmen einer gegebenen Vorrichtung unter Verwendung einer gegebenen Einstellung, Neupositionieren einer gegebenen Vorrichtung, Hinzufügen einer gegebenen Vorrichtung, Entfernen einer gegebenen Vorrichtung.

4. System (100) nach einem der vorstehenden Ansprüche, wobei die Räumlichkeitsplanungsdaten in Form von mindestens einem Bild des mindestens einen Bodenplans der Räumlichkeit (110) vorliegen, wobei beim Verarbeiten der Räumlichkeitsplanungsdaten über die erste Verarbeitungspipeline (202) der mindestens eine Server (112) konfiguriert ist zum:
- Extrahieren, aus dem mindestens einen Bild, von Metadaten, die sich auf die Räumlichkeit beziehen;
- Aufteilen des mindestens einen Bildes unter Verwendung eines Räumlichkeitsplanteilers (206) in eine Vielzahl von Bildern, die Bodenpläne einer Vielzahl von interessierenden Einheiten in der Räumlichkeit darstellen;
- Umwandeln der Vielzahl von Bildern unter Verwendung eines Räumlichkeitsplanumwandlers (208) in eine interne Darstellung der Räumlichkeit, wobei ein Format der internen Darstellung von einem Bilddateiformat der Vielzahl von Bildern verschieden ist; und
- Transformieren der internen Darstellung der Räumlichkeit unter Verwendung des Räumlichkeitsplan-Einbetters (210) in eine erste Vektordarstellung, wobei die erste Vektordarstellung und die Metadaten, die sich auf die Räumlichkeit beziehen, zusammen die erste Ausgabe der ersten Verarbeitungspipeline (202) bilden.

5. Verfahren (100) nach einem der vorstehenden Ansprüche, wobei:
- der Räumlichkeitsplanteiler (206) unter Verwendung eines ersten Algorithmus implementiert ist, wobei der erste Algorithmus mindestens eines ist von: einem Algorithmus für ein tiefes neuronales Netz, einem Computer-Vision-Algorithmus;
- der Räumlichkeitsplanumwandler (208) unter Verwendung einer Vielzahl von zweiten Algorithmen implementiert ist, wobei die Vielzahl von zweiten Algorithmen als ein semantischer Segmentierungsalgorithmus und ein Klassifizierungsalgorithmus implementiert ist; und
- der Räumlichkeitsplan-Einbetter (210) unter Verwendung eines dritten Algorithmus implementiert ist, wobei der dritte Algorithmus mindestens eines ist von: Algorithmus für ein neuronales Faltungsnetz, Algorithmus für selbstüberwachtes Lernen.

6. System (100) nach einem der vorstehenden Ansprüche, wobei beim Verarbeiten der Netzwerkdaten über die zweite Verarbeitungspipeline (204) der mindestens eine Server (112) konfiguriert ist zum:
- Extrahieren, aus den Netzwerkdaten, von Metadaten, die sich auf die Vorrichtungen (102, 104, 106) in dem Kommunikationsnetzwerk (108) und die Leistung des Kommunikationsnetzwerks beziehen;
- Umwandeln der Netzwerkdaten unter Verwendung eines Mesh-Umwandlers (216) in eine interne Darstellung der Vorrichtungen (102, 104, 106) in dem Kommunikationsnetzwerk (108) und der Leistung des Kommunikationsnetzwerks, wobei sich ein Format der internen Darstellung von mindestens einem Format der Netzwerkdaten unterscheidet; und
- Transformieren der internen Darstellung der Vorrichtungen (102, 104, 106) in dem Kommunikationsnetzwerk (108) und der Leistung des Kommunikationsnetzwerks unter Verwendung eines Mesh-Einbetters (218) in eine zweite Vektordarstellung, wobei die zweite Vektordarstellung und die Metadaten, die sich auf die Vorrichtungen in dem Kommunikationsnetzwerk beziehen, gemeinsam die zweite Ausgabe der zweiten Verarbeitungspipeline (204) bilden.

7. System (100) nach Anspruch 6, wobei der Mesh-Einbetter (218) unter Verwendung von mindestens einem implementiert ist von: einem Transformermodell, einem Autoencoder-Modell.

8. System (100) nach Anspruch 7, wobei der mindestens eine Server (112) ferner konfiguriert ist, um das Transformermodell und/oder das Autoencodermodell unter Verwendung eines Optimierungsalgorithmus zu trainieren, wobei der Optimierungsalgorithmus mindestens eines ist von: einem Gradientenabstieg-Optimierungsalgorithmus, einem Adam-Optimierungsalgorithmus, einem stochastischer Gradientenabstieg-Algorithmus.

9. System (100) nach einem der vorstehenden Ansprüche, wobei beim Verarbeiten der ersten Ausgabe und der zweiten Ausgabe unter Verwendung der auf Verstärkungslernen basierenden Verarbeitungsschleife (224) der mindestens eine Server (112) konfiguriert ist zum:
- Bewerten einer aktuellen Qualität des Kommunikationsnetzwerks (108) basierend auf den Räumlichkeitsplanungsdaten und den Netzwerkdaten;
- Bestimmen, ob die aktuelle Qualität des Kommunikationsnetzwerks (108) geringer als eine vorgegebene Qualität ist; und
- wenn die aktuelle Qualität des Kommunikationsnetzwerks (108) geringer als die vorgegebene Qualität ist, Verwenden einer Funktion, die einen Satz von Aktionen, die entsprechend einem aktuellen Zustand des Kommunikationsnetzwerks durchführbar sind, auf eine erwartete Qualität des Kommunikationsnetzwerks abbildet, die bei Implementierung des Satzes von Aktionen erreicht werden würde, wobei die Aktionen in dem Satz als die mindestens eine Aktion identifiziert werden, wenn die erwartete Qualität des Kommunikationsnetzwerks gleich oder größer als die vorgegebene Qualität ist.

10. System (100) nach einem der vorstehenden Ansprüche, wobei die auf Verstärkungslernen basierende Verarbeitungsschleife (224) unter Verwendung eines Verstärkungslernalgorithmus implementiert ist, wobei der Verstärkungslernalgorithmus eines ist von: einem Q-Learning-Algorithmus, einem Deep-Q-Learning-Algorithmus, ein Deep-Deterministic-Policy-Gradient-Algorithmus, einem Q-Learning-Algorithmus mit normalisierten Vorteilsfunktionen.

11. System (100) nach Anspruch 10, wobei der mindestens eine Server (112) ferner konfiguriert ist zum:
- Durchführen einer Simulation und/oder eines A/B-Tests des Kommunikationsnetzwerks (108), um eine Referenzausgabe zu erhalten; und
- Auswählen des Verstärkungslernalgorithmus basierend auf der Referenzausgabe.

12. System (100) nach einem der vorstehenden Ansprüche, wobei der mindestens eine Server (112) ferner konfiguriert ist, um mindestens eines zu erfassen von: einer Änderung in der Räumlichkeit (110), einer Änderung in dem mindestens einen Bodenplan der Räumlichkeit, einer Änderung der Vorrichtungen (102, 104, 106) in dem Kommunikationsnetzwerk (108), einer Änderung der Leistung der Vorrichtungen in dem Kommunikationsnetzwerk, wobei die Räumlichkeitsplanungsdaten und die Netzwerkdaten bei einer solchen Erfassung erhalten werden.

13. System (100) nach einem der vorstehenden Ansprüche, ferner umfassend einen Datenspeicher, der kommunikativ an den mindestens einen Server (112) gekoppelt ist, wobei der mindestens eine Server konfiguriert ist, um in dem Datenspeicher mindestens eines zu speichern von: den Räumlichkeitsplanungsdaten, den Netzwerkdaten, der ersten Ausgabe, der zweiten Ausgabe, Informationen, die sich auf die mindestens eine Aktion beziehen.

14. Verfahren zum Verwalten von Vorrichtungen (102, 104, 106) in einem Kommunikationsnetzwerk (108), das in einer Räumlichkeit (110) implementiert ist, das Verfahren umfassend:
- Erhalten von Räumlichkeitsplanungsdaten und Netzwerkdaten von einem Dienst (228), der mit der Räumlichkeit assoziiert ist, wobei die Räumlichkeitsplanungsdaten sich auf mindestens einen Bodenplan der Räumlichkeit beziehen und die Netzwerkdaten sich auf die Vorrichtungen in dem Kommunikationsnetzwerk und eine Leistung des Kommunikationsnetzwerks beziehen, wobei die Vorrichtungen in dem Kommunikationsnetzwerk in einer Mesh-Netzwerktopologie kommunikativ/betriebsfähig gekoppelt sind;
- Verarbeiten der Räumlichkeitsplanungsdaten über eine erste Verarbeitungspipeline (202), um eine erste Ausgabe zu erzeugen;
- Verarbeiten der Netzwerkdaten über eine zweite Verarbeitungspipeline (204), um eine zweite Ausgabe zu erzeugen; und
- Verarbeiten der ersten Ausgabe und der zweiten Ausgabe unter Verwendung einer auf Verstärkungslernen basierenden Verarbeitungsschleife (224), um mindestens eine Aktion zu bestimmen, die zum Verwalten der Vorrichtungen in dem Kommunikationsnetzwerk implementiert werden soll,
wobei die erste und die zweite Verarbeitungspipeline (202, 204) konfiguriert sind, um die Räumlichkeitsplanungsdaten und die Netzwerkdaten auf parallele Weise auszuführen.

15. Computerprogrammprodukt zum Verwalten von Vorrichtungen (102, 104, 106) in einem Kommunikationsnetzwerk (108), das in einer Räumlichkeit (110) implementiert ist, wobei das Computerprogrammprodukt einen nichtflüchtigen maschinenlesbaren Datenträger mit darauf gespeicherten Programmanweisungen umfasst, die, wenn durch eine Verarbeitungsvorrichtung darauf zugegriffen wird, die Verarbeitungsvorrichtung veranlassen, Schritte eines Verfahrens nach Anspruch 14 auszuführen.

## Revendications

1. Système (100) de gestion de dispositifs (102, 104, 106) dans un réseau de communication (108) qui est mis en œuvre dans des locaux (110), le système comprenant au moins un serveur (112) configuré pour :
- obtenir des données de planification de locaux et des données de réseau à partir d'un service (228) associé aux locaux, dans lequel les données de planification de locaux se rapportent à au moins un plan d'étage des locaux et les données de réseau se rapportent aux dispositifs dans le réseau de communication et à une performance du réseau de communication, dans lequel les dispositifs dans le réseau de communication sont couplés en communication/fonctionnement dans une topologie de réseau maillé ;
- traiter les données de planification de locaux par l'intermédiaire d'un premier pipeline de traitement (202) pour générer une première sortie ;
- traiter les données de réseau par l'intermédiaire d'un second pipeline de traitement (204) pour générer une seconde sortie ; et
- traiter la première sortie et la seconde sortie à l'aide d'une boucle de traitement basée sur l'apprentissage par renforcement (224) pour déterminer au moins une action qui est à mettre en œuvre pour gérer les dispositifs dans le réseau de communication,
dans lequel les premier et second pipelines de traitement (202, 204) sont configurés pour exécuter les données de planification de locaux, et les données de réseau de manière parallèle.

2. Système (100) selon la revendication 1, dans lequel l'au moins un serveur (112) est en outre configuré pour fournir une communication indiquant l'au moins une action à mettre en œuvre sous la forme d'au moins l'une parmi : une notification, une interface web, une interface vocale, à un dispositif utilisateur (226) couplé en communication à l'au moins un serveur.

3. Système (100) selon la revendication 1 ou 2, dans lequel l'au moins une action comprend au moins l'un parmi : le réglage d'un dispositif donné à l'aide d'un réglage donné, le repositionnement d'un dispositif donné, l'ajout d'un dispositif donné, le retrait d'un dispositif donné.

4. Système (100) selon l'une quelconque des revendications précédentes, dans lequel les données de planification de locaux se présentent sous la forme d'au moins une image de l'au moins un plan d'étage des locaux (110), dans lequel, lors du traitement des données de planification de locaux via le premier pipeline de traitement (202), l'au moins un serveur (112) est configuré pour :
- extraire, de ladite au moins une image, des métadonnées relatives aux lieux ;
- diviser l'au moins une image, à l'aide d'un diviseur de plan de locaux (206), en une pluralité d'images représentant des plans d'étage d'une pluralité d'unités d'intérêt dans les locaux ;
- convertir la pluralité d'images, à l'aide d'un convertisseur de plan de locaux (208), en une représentation interne des locaux, dans lequel un format de la représentation interne est différent d'un format de fichier d'image de la pluralité d'images ; et
- transformer la représentation interne des locaux, à l'aide du dispositif d'intégration de plan des locaux (210), en une première représentation vectorielle, dans lequel la première représentation vectorielle et les métadonnées relatives aux locaux constituent collectivement la première sortie du premier pipeline de traitement (202).

5. Système (100) selon l'une quelconque des revendications précédentes, dans lequel :
- le séparateur de plan de locaux (206) est mis en œuvre à l'aide d'un premier algorithme, le premier algorithme étant au moins l'un parmi : un algorithme de réseau de neurones profonds, un algorithme de vision par ordinateur ;
- le convertisseur de plan de locaux (208) est mis en œuvre à l'aide d'une pluralité de seconds algorithmes, la pluralité de seconds algorithmes étant mise en œuvre sous la forme d'un algorithme de segmentation sémantique et d'un algorithme de classification ; et
- le dispositif d'intégration de plan de locaux (210) est mis en œuvre à l'aide d'un troisième algorithme, le troisième algorithme étant au moins l'un parmi : un algorithme de réseau de neurones convolutif, un algorithme d'apprentissage auto-supervisé.

6. Système (100) selon l'une quelconque des revendications précédentes, dans lequel, lors du traitement des données de réseau par l'intermédiaire d'un second pipeline de traitement (204), l'au moins un serveur (112) est configuré pour :
- extraire, des données de réseau, des métadonnées relatives aux dispositifs (102, 104, 106) dans le réseau de communication (108) et aux performances du réseau de communication ;
- convertir les données de réseau, à l'aide d'un convertisseur de maillage (216), en une représentation interne des dispositifs (102, 104, 106) dans le réseau de communication (108) et de la performance du réseau de communication, dans lequel un format de la représentation interne est différent d'au moins un format des données de réseau ; et
- transformer la représentation interne des dispositifs (102, 104, 106) dans le réseau de communication (108) et la performance du réseau de communication, à l'aide d'un intégrateur de maillage (218), en une seconde représentation vectorielle, dans lequel la seconde représentation vectorielle et les métadonnées se rapportant aux dispositifs dans le réseau de communication constituent collectivement la seconde sortie du second pipeline de traitement (204).

7. Système (100) selon la revendication 6, dans lequel le dispositif d'intégration de maillage (218) est mis en œuvre à l'aide d'au moins l'un parmi : un modèle de transformeur, un modèle d'auto-encodeur.

8. Système (100) selon la revendication 7, dans lequel l'au moins un serveur (112) est en outre configuré pour entraîner le modèle de transformateur et/ou le modèle d'auto-encodeur à l'aide d'un algorithme d'optimisation, l'algorithme d'optimisation étant au moins l'un parmi : un algorithme d'optimisation de descente de gradient, un algorithme d'optimisation Adam, un algorithme de descente de gradient stochastique.

9. Système (100) selon l'une quelconque des revendications précédentes, dans lequel, lors du traitement de la première sortie et de la seconde sortie à l'aide de la boucle de traitement basée sur l'apprentissage par renforcement (224), l'au moins un serveur (112) est configuré pour :
- évaluer une qualité actuelle du réseau de communication (108), sur la base des données de planification de locaux et des données de réseau ;
- déterminer si la qualité actuelle du réseau de communication (108) est inférieure à une qualité prédéfinie ; et
- lorsque la qualité actuelle du réseau de communication (108) est inférieure à la qualité prédéfinie, utiliser une fonction qui met en correspondance un ensemble d'actions qui sont réalisables correspondant à un état actuel du réseau de communication avec une qualité attendue du réseau de communication qui serait obtenue lors de la mise en œuvre de l'ensemble d'actions, dans lequel les actions de l'ensemble sont identifiées comme l'au moins une action lorsque la qualité attendue du réseau de communication est égale ou supérieure à la qualité prédéfinie.

10. Système (100) selon l'une quelconque des revendications précédentes, dans lequel la boucle de traitement basée sur l'apprentissage par renforcement (224) est mise en œuvre à l'aide d'un algorithme d'apprentissage par renforcement, l'algorithme d'apprentissage par renforcement étant l'un parmi : un algorithme de Q-learning, un algorithme de Q-learning profond, un algorithme de gradient de politique déterministe profond, un algorithme de Q-learning avec des fonctions d'avantage normalisées.

11. Système (100) selon la revendication 10, dans lequel l'au moins un processeur (112) est en outre configuré pour :
- effectuer une simulation et/ou des tests A/B du réseau de communication (108) pour obtenir une sortie de référence ; et
- sélectionner l'algorithme d'apprentissage par renforcement sur la base de la sortie de référence.

12. Système (100) selon l'une quelconque des revendications précédentes, dans lequel l'au moins un serveur (112) est en outre configuré pour détecter au moins l'un parmi : un changement dans les locaux (110), un changement dans l'au moins un plan d'étage des locaux, un changement dans les dispositifs (102, 104, 106) dans le réseau de communication (108), un changement de performance des dispositifs dans le réseau de communication, dans lequel les données de planification de locaux et les données de réseau sont obtenues lors d'une telle détection.

13. Système (100) selon l'une quelconque des revendications précédentes, comprenant en outre un référentiel de données couplé de manière communicante à l'au moins un serveur (112), dans lequel l'au moins un serveur est configuré pour stocker, dans le référentiel de données, au moins l'un parmi : les données de planification de locaux, les données de réseau, la première sortie, la seconde sortie, des informations se rapportant à l'au moins une action.

14. Procédé de gestion de dispositifs (102, 104, 106) dans un réseau de communication (108) qui est mis en œuvre dans des locaux (110), le procédé comprenant :
- l'obtention de données de planification de locaux et de données de réseau à partir d'un service (228) associé aux locaux, dans lequel les données de planification de locaux se rapportent à au moins un plan d'étage des locaux et les données de réseau se rapportent aux dispositifs dans le réseau de communication et à une performance du réseau de communication, dans lequel les dispositifs dans le réseau de communication sont couplés de manière communicante/fonctionnelle dans une topologie de réseau maillé ;
- le traitement des données de planification de locaux par l'intermédiaire d'un premier pipeline de traitement (202) pour générer une première sortie ;
- le traitement des données de réseau par l'intermédiaire d'un second pipeline de traitement (204) pour générer une seconde sortie ; et
- le traitement de la première sortie et de la seconde sortie à l'aide d'une boucle de traitement basée sur l'apprentissage par renforcement (224) pour déterminer au moins une action à mettre en œuvre pour gérer les dispositifs dans le réseau de communication,
dans lequel les premier et second pipelines de traitement (202, 204) sont configurés pour exécuter les données de planification de locaux, et les données de réseau de manière parallèle.

15. Produit-programme d'ordinateur destiné à gérer des dispositifs (102, 104, 106) dans un réseau de communication (108) qui est mis en œuvre dans des locaux (110), dans lequel le produit programme d'ordinateur comprend un support de stockage de données non volatil lisible par machine sur lequel sont stockées des instructions de programme qui, lorsqu'un dispositif de traitement y accède, amènent le dispositif de traitement à exécuter les étapes d'un procédé selon la revendication 14.
